# EUROPÄISCHE PATENTSCHRIFT

(11) **EP 2 226 540 B1**
(45) Veröffentlichungstag und Bekanntmachung des Hinweises auf die Patenterteilung: **30.05.2018**
(21) Anmeldenummer: 10002226.8
(22) Anmeldetag: 04.03.2010
(51) Int. Cl.: F16K 31/46, F16K 31/60, E03C 1/02

(54) **Sanitäre Unterputzarmatur**
Sanitary built-in fitting
Armature encastrée sanitaire

(30) Priorität: 06.03.2009 DE 102009011559
(43) Veröffentlichungstag der Anmeldung: 08.09.2010
(73) Patentinhaber: Hansa Armaturen GmbH, 70567 Stuttgart (DE)
(72) Erfinder: Harsch, Martin, 74395 Mundelsheim (DE)
(74) Vertreter: Ostertag & Partner Patentanwälte mbB

(56) Entgegenhaltungen:
- EP-A2- 0 506 215
- EP-A2- 0 854 243
- US-A- 4 445 529
- US-A1- 2003 136 934

## Beschreibung

Die Erfindung betrifft eine sanitäre Unterputzarmatur nach dem Oberbegriff des Patentanspruchs 1.

Sanitäre Unterputzarmaturen dieser Art unterliegen einer besonderen Problematik: Die Tiefe, in welcher die verschiedenen wasserführenden Leitungen in der Wand verlaufen, in welcher die Unterputzarmatur montiert werden soll (nachfolgend kurz "Montagewand" genannt), kann verhältnismäßig stark differieren. Die Bauelemente, die von dem Gehäuse der Unterputzarmatur ausgehend aus der Montagewand heraus geführt werden müssen, insbesondere also die Ventilspindel, müssen in ihrer Länge an die jeweilige Einbausituation anpassbar sein.

Bei bekannten Unterputzarmaturen der eingangs genannten Art, wie sie derzeit auf dem Markt sind, geschieht diese Anpassung in folgender Weise: Die Ventilspindel wird werkseitig in einer "Überlänge" gefertigt und ausgeliefert, die im Allgemeinen auch für die tiefsten anzutreffenden Einbausituationen ausreichend ist. Sie wird dann vor Ort vom Sanitärinstallateur entsprechend den angetroffenen Gegebenheiten beispielsweise durch Absägen abgelängt. Diese bekannten Ventilspindeln besitzen eine Außenverzahnung, die der drehschlüssigen Verbindung mit dem Befestigungsteil dient. In regelmäßigen Abständen ist die Außenverzahnung durch Nuten unterbrochen, beispielsweise in Abständen von 6 mm. Das Befestigungsteil besitzt eine Aufnahme mit einer Innenverzahnung, die zur Außenverzahnung der Ventilspindel komplementär ist und in die die Ventilspindel eingeführt werden kann. Rastelemente dieses Befestigungsteils greifen in die nächste, benachbarte Nut der Ventilspindel ein und fixieren auf diese Weise das Befestigungsteil in axialer Richtung an der Ventilspindel.

Wenn nun an diesem Befestigungsteil der Handgriff befestigt ist, kann im ungünstigsten Fall der Abstand zwischen dem der Montagewand zugewandten Rand des Handgriffes und dem diesem benachbarten Bauelement, im Allgemeinen einer Rosette, ebenso groß sein wie der Abstand zwischen aufeinanderfolgenden Nuten auf der Ventilspindel. Nur im günstigsten, zufällig eintretenden Falle ist dieser Abstand klein.

Häufig besitzen bei bekannten sanitären Unterputzarmaturen die Handgriffe eine axiale Überlappung mit der benachbarten Rosette, übergreifen diese also becherartig. Dann wird zwischen der inneren Mantelfläche des Handgriffes und der äußeren Mantelfläche der Rosette ein Spalt gebildet, dessen Breite im Wesentlichen unabhängig von der axialen Relativposition zwischen Handgriff und Rosette ist. In jüngster Zeit werden jedoch aus ästhetischen Gründen Handgriffe gewünscht, deren Durchmesser gleich oder sogar kleiner als der Durchmesser des benachbarten Bauelementes, also im Allgemeinen der Rosette, ist. In diesen Fällen liegt nunmehr zwischen dem der Montagewand zugewandten Rand des Handgriffes und dem benachbarten Bauteil ein axialer Spalt vor, der bei herkömmlicher Art der Befestigung des Handgriffes auf der Ventilspitze in unschöner Weise variieren kann.

Eine sanitäre Unterputzarmatur der eingangs genannten Art ist beispielsweise aus der US 4 445 529 bekannt geworden. Dort wird auf ein Ablängen der Ventilspindel im Einbauzustand verzichtet. Stattdessen wird der Handgriff mit einer recht tiefen Aufnahmebohrung versehen, so dass auch eine länger überstehende Ventilspindel darin aufgenommen werden kann. Das Spaltmaß zwischen Handgriff und Rosette wird mittels einer Madenschraube im Handgriff vor Ort festgelegt.

Eine weitere sanitäre Unterputzarmatur beschreibt die EP 0 654 243 A2. Auch hier legt der Monteur vor Ort den Abstand zwischen dem Handgriff und der Rosette fest.

Aufgabe der vorliegenden Erfindung ist es, eine sanitäre Unterputzarmatur der eingangs genannten Art derart auszugestalten, dass ein axialer Spalt zwischen dem der Montagewand zugewandten Rand des Handgriffes und der in axialer Richtung benachbarten Rosette in allen Einbausituationen auf einem definierten Spaltmass gehalten werden kann.

Diese Aufgabe wird erfindungsgemäß durch eine sanitäre Unterputzarmatur mit den im Patentanspruch 1 angegebenen Merkmalen gelöst.

Bei der erfindungsgemäßen Art, das Befestigungsteil auf der Ventilspindel zu befestigen, ist also grundsätzlich jede axiale Relativposition zwischen dem Endbereich der Ventilspindel und dem Befestigungsteil selbst möglich. Eine Abstufung in diskrete Relativpositionen, die von einander einen definierten Abstand besitzen, gibt es nicht mehr. Die Fixierung des Befestigungsteil an der Ventilspindel kann so erfolgen, wie dies die jeweilige Einbausituation erfordert, um den Handgriff nahe an die benachbarte Rosette heranzubringen.

Zweckmäßigerweise ist das Befestigungsteil ein Befestigungsring, wobei die Aufnahme für die Ventilspindel durch die mittlere Durchgangsöffnung des Befestigungsringes gebildet ist. In diesem Falle kann die Ventilspindel vollständig durch das Befestigungsteil hindurchgeschoben werden und auf dessen Rückseite etwas überstehen.

Das Befestigungselement ist im einfachsten Falle eine Madenschraube, die so durch eine Gewindebohrung des Befestigungsteils schraubbar ist, dass sich ihr inneres Ende gegen die Ventilspindel anlegt. Durch Eindrehen dieser Madenschraube kann also das Befestigungsteil auf der Ventilspindel axial fixiert werden, wenn einmal die für die jeweilige Einbauposition richtige relative Axialposition zwischen Befestigungsteil und Ventilspindel gefunden ist.

Das Befestigungsteil seinerseits kann Rastelemente aufweisen, mit denen es mit komplementären Rastelementen des Handgriffes drehschlüssig verrastet werden kann. Dies bedeutet, dass nach der Befestigung des Befestigungsteils auf der Ventilspindel die Montage des Handgriffes durch einfaches Aufdrücken auf das Befestigungsteil geschehen kann.

Ein Ausführungsbeispiel der Erfindung wird nachfolgend
anhand der Zeichnung näher erläutert; es zeigen
- Figur 1:: einen axialen Teilschnitt durch ein Unterputz-Absperrventil in einer ersten Einbausituation;
- Figur 2:: einen Teilschnitt, ähnlich der Figur 1, durch das Unterputz-Absperrventil in einer zweiten Einbausituation;
- Figur 3:: einen Axialschnitt durch einen Befestigungsring, der bei der Armatur nach den Figuren 1 und 2 Verwendung findet.

Das in der Zeichnung dargestellte und insgesamt mit dem Bezugszeichen 1 gekennzeichnete Unterputz-Absperrventil ist ein Beispiel für eine Unterputzarmatur und besitzt bis auf die nachfolgend im Einzelnen beschriebenen Besonderheiten herkömmliche Bauweise. Es umfasst ein Gehäuse 2 mit einem Wassereinlassanschluss 3 und einem Wasserauslassanschluss 4. Im Inneren des Gehäuses 2 befindet sich ein nicht dargestelltes, den Wasserstrom steuerndes bewegliches Steuerelement, dessen Position von einer aus dem Gehäuse 2 herausragenden, drehbaren Ventilspindel 5 bestimmt werden kann. Auf Einzelheiten der Wasserführung innerhalb des Gehäuses 2 und der Bewegungskinematik des Ventilelementes kommt es hier nicht näher an.

Die Ventilspindel 5 ist in ebenfalls bekannter Weise auf ihrer Mantelfläche mit einer Verzahnung 6 versehen, die in regelmäßigen Abständen von Nuten 7 unterbrochen ist.

Auf einem Außengewinde 8 des Gehäuses 2 ist eine Putzhülse 9 aufgeschraubt, welche die Ventilspindel 5 koaxial umgibt und in der Einbausituation dazu dient, ihren Innenraum von Putz oder anderen Teilen der Montagewand freizuhalten. Die Putzhülse 9 besteht aus Karton oder Kunststoff; sie kann vor Ort auf diejenige Länge abgesägt werden, die in der jeweiligen Einbausituation benötigt wird.

Koaxial innerhalb der Putzhülse 9 und ebenfalls auf einem Außengewinde 10 des Gehäuses 2 befestigt ist eine Stützhülse 11, die ein Außengewinde 12 trägt. Auch diese Stützhülse 11 kann durch Absägen in ihrer Länge der jeweiligen Einbausituation angepasst werden.

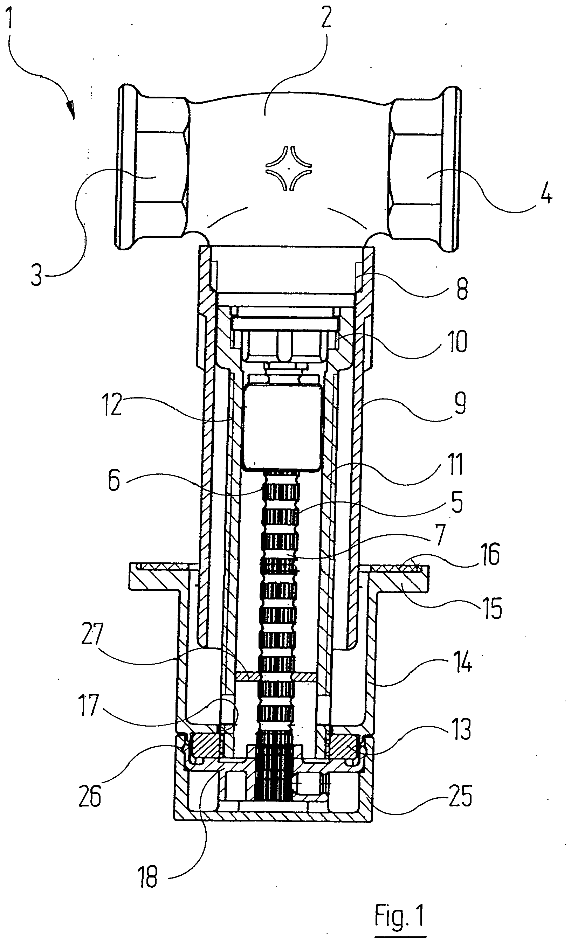

Am freien Ende der Stützhülse 11 ist auf deren Außengewinde 12 ein mit einem entsprechenden Innengewinde versehener Schraubring 13 aufgeschraubt. Mit Hilfe dieses Schraubringes 13 lässt sich eine becherförmige Rosette 14 gegen die Außenfläche, häufig eine Verfliesung, der Montagewand andrücken. Hierzu besitzt die Rosette 14 einen umlaufen, radial überstehenden Flansch 15, in dessen der Wand zugewandten Stirnseite eine Flach-Ringdichtung 16 eingelegt ist. In der Ebene der in Figur 1 oben liegenden Stirnseite dieser Flach-Ringdichtung 16 ist die Außenfläche der Montagewand zu denken.

Die Stützhülse 11 sowie die Ventilspindel 5 sind durch eine Öffnung 17 im Boden der Rosette 14 nach außen geführt. Der Schraubring 13 liegt von der Außenseite her gegen den Boden der Rosette 14 an. Ersichtlich kann durch Verdrehen des Schraubringes 13 auf der Stützhülse 11 die Rosette 14 mit ihrem Flansch bzw. der darin einliegenden Flach-Ringdichtung 16 gegen die Außenfläche der Montagewand angedrückt werden.

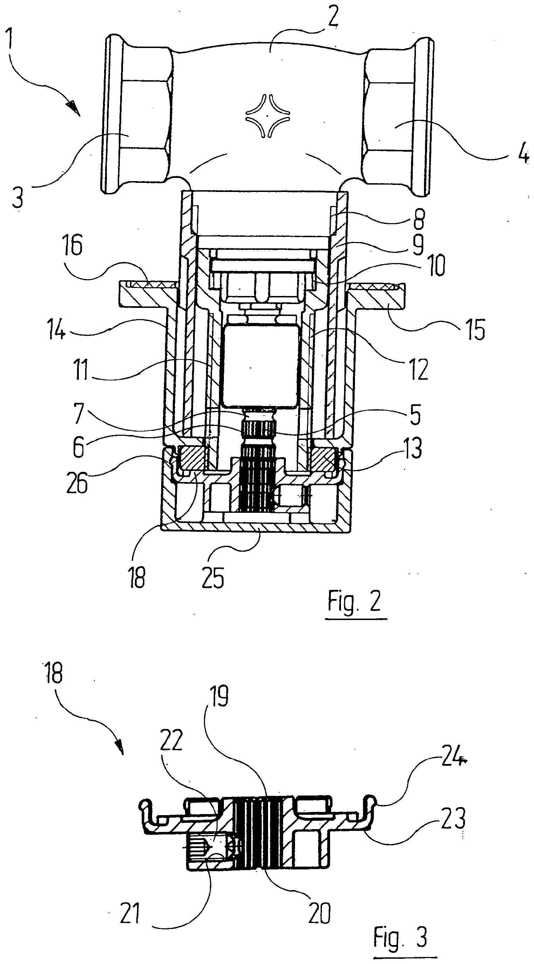

Auf den äußersten Endbereich der Ventilspindel 5 ist ein Befestigungsteil in Form eines Befestigungsrings 18 aufgesteckt, der in Figur 3 im größeren Maßstab herausgezeichnet ist. Der Befestigungsring 18 weist eine mittige Durchgangsbohrung 19 auf, deren Mantelfläche mit einer Verzahnung 20 versehen ist. Die Verzahnung 20 der Bohrung 19 ist komplementär zu der Verzahnung 6 auf der Ventilspindel 5. Eine radiale Gewindebohrung 21 führt von der Mantelfläche des Befestigungsringes 18 in die Bohrung 19 hinein. In diese Gewindebohrung 21 kann ein Befestigungselement in Form einer Madenschraube 22 eingedreht werden.

Radial nach außen ragend sind an den Befestigungsring 18 mehrere Rastelemente in Form von Rastnasen 23 angeformt, die in ihrem äußeren Bereich um 90° in axiale Richtung umgebogen sind und an ihren Enden Rastverdickungen 24 besitzen.

Das Unterputz-Absperrventil 1 weist schließlich einen becherförmigen Griff 25 auf, der an seiner inneren Mantelfläche Rastelemente in Form einer umlaufenden, mit den Rastnasen 23 bzw. deren Rastverdickungen 24 zusammenwirkende Rastnut 26 besitzt.

Das oben beschriebene Unterputz-Absperrventil 1 wird je nach Einbausituation wie folgt montiert:
Werkseitig geliefert wird das Unterputz-Absperrventil 1 mit einer Länge der Putzhülse 9, der Stützhülse 11 und der Ventilspindel 5, die einer bestimmten maximalen Einbautiefe des Gehäuses 2 in der Montagewand entspricht. In Figur 1 wird davon ausgegangen, dass eine solche Einbausituation vorliegt, bei welcher die wasserführenden und mit den Anschlüssen 3 und 4 zu verbindenden Leitungen sehr tief in der Montagewand liegen. Die Putzhülse 9, die Stützhülse 11 und die Ventilspindel 5 werden daher bei ihrer ursprünglichen, werkseitig vorgegebenen Länge belassen.

Zunächst wird das Gehäuse 2 in die Montagewand eingeführt; die Wasser-Zuleitung wird an dem Einlassanschluss 3, die Wasser-Abführleitung an dem Auslassanschluss 4 befestigt. Nun werden das Gehäuse 2 und der Raum um die Putzhülse 9 eingeputzt und die endgültige Wandoberfläche hergestellt, beispielsweise durch Verfliesung. Wenn diese Arbeiten abgeschlossen sind, wird die Rosette 14 über die Stützhülse 11 und die Putzhülse 9 geschoben; ihre Flachdichtung 16 wird gegen die Außenfläche der Montagewand angelegt. Durch Aufschrauben des Schraubringes 13 auf das Außengewinde 12 der Stützhülse 11 wird die Rosette 14 gegen die Außenfläche der Montagewand gedrückt und dort festgehalten.

Nunmehr wird der Befestigungsring 18 auf die Ventilspindel 5 aufgeschoben, wobei die Verzahnung 20 des Befestigungsringes 18 in die Verzahnung 6 der Ventilspindel 5 eingreift und auf diese Weise eine drehschlüssige Verbindung zwischen dem Befestigungsring 18 und der Ventilspindel 5 herstellt. Mit Hilfe der Madenschraube 22 wird der Befestigungsring 18 in einer solchen axialen Position auf der Ventilspindel 5 fixiert, die später zu dem gewünschten vorgegebenen kleinen Abstand zwischen dem Rand des Griffes 25 und der Rosette 14 führt. Abschließend wird der Griff 25 in axialer Richtung über den Befestigungsring 18 aufgeschoben, bis die Rastverdikkungen 24 der Rastnasen 23 in die Rastnut 26 des Griffes 25 einrasten. Auch diese Rastverbindung ist drehschlüssig.

Damit ist die Montage des Unterputz-Absperrventils 1 abgeschlossen. Zwischen dem freien Rand des Griffes 25 und der Rosette 14 liegt der gewünschte sehr kleine Spalt vor.

Liegen die Wasserleitungen in einem anderen Einsatzfall nicht so tief unterhalb der Wandoberfläche, so können einfach die Putzhülse 9, die Stützhülse 11 und die Ventilspindel 5 entsprechend abgesägt werden. Diese Situation ist in Figur 2 dargestellt. Im Übrigen geschieht die Montage der Unterputz-Absperrarmatur 1 in exakt der gleichen Weise. Erneut kann zwischen dem Rand des Griffes 25 und der Rosette 14 der gewünschte Spalt herbeigeführt werden und zwar unabhängig von dem Abstand, den die Nuten 7 auf der Ventilspindel 5 voneinander besitzen.

Tatsächlich wären diese Nuten 7 bei der erfindungsgemäßen Ausgestaltung des Unterputz-Absperrventils im Grunde entbehrlich, da sie nicht mehr zur Befestigung des Befestigungsrings 18 verwendet werden. In einer Einbausituation, wie sie in Figur 1 dargestellt ist und in der die Stützhülse 11 eine verhältnismäßig große Länge besitzt, können sie jedoch zur Halterung eines Stützringes 27 eingesetzt werden, welcher an der inneren Mantelfläche der Stützhülse 11 zur Anlage kommt.

## Patentansprüche

1. Sanitäre Unterputzarmatur mit
a) einem in einer Montagewand in Abstand zu deren Außenfläche anordenbaren Gehäuse (2), das mindestens einen Einlass (3) für Wasser und mindestens ein einen Wasserstrom steuerndes Steuerelement enthält;
b) einer aus dem Gehäuse herausragenden Ventilspindel (5), mit welcher das Steuerelement in dem Gehäuse (2) bewegbar und deren Länge an die jeweilige Einbausituation in der Montagewand anpassbar ist;
c) einem auf dem äußeren Endbereich der Ventilspindel (5) drehschlüssig angeordneten Befestigungsteil (18);
d) einem an dem Befestigungsteil (18) drehschlüssig befestigten Handgriff (25); wobei
e) das Befestigungsteil (18) eine Aufnahme (19) aufweist, in welcher die Ventilspindel (5) axial verschiebbar aber drehschlüssig aufgenommen werden kann;
f) das Befestigungsteil (18) ein Befestigungselement (22) aufweist, mit dem das Befestigungsteil (18) in beliebigen Axialpositionen auf der Ventilspindel (5) fixierbar ist; **dadurch gekennzeichnet, dass**
g) eine Stützhülse (11) vorgesehen ist, die ein Außengewinde (12) trägt, auf welches ein Schraubring (13) aufgeschraubt ist, um eine zur Unterputzarmatur gehörende Rosette (14) gegen die Montagewand zu drücken, und dass
h) das Befestigungsteil (18) beim Befestigen derart an dem Schraubring (13) anliegt, dass ein axialer Spalt zwischen einem der Montagewand zugewandten Rand des Handgriffes (25) und der in axialer Richtung benachbarten Rosette (14) auf einem definierten Spaltmaß gehalten wird.

2. Sanitäre Unterputzarmatur nach Anspruch 1, **dadurch gekennzeichnet, dass** das Befestigungsteil (18) ein Befestigungsring ist und die Aufnahme (19) für die Ventilspindel (5) durch die mittlere Durchgangsbohrung des Befestigungsrings (18) gebildet ist.

3. Sanitäre Unterputzarmatur nach Anspruch 1 oder 2, **dadurch gekennzeichnet, dass** das Befestigungselement eine Madenschraube (22) ist, die so durch eine Gewindebohrung (21) des Befestigungsteiles (18) schraubbar ist, dass sich ihr inneres Ende gegen die Ventilspindel (5) anlegt.

4. Sanitäre Unterputzarmatur nach einem der vorhergehenden Ansprüche, **dadurch gekennzeichnet, dass** das Befestigungsteil (18) Rastelemente (23) aufweist, mit denen es mit komplementären Rastelementen (26) des Handgriffs (25) drehschlüssig verrastet werden kann.

## Claims

1. Sanitary built-in fitting having
a) a housing (2) which can be arranged in a mounting wall at a distance from the outer surface thereof, which housing contains at least one inlet (3) for water and at least one control element which controls a water flow;
b) a valve spindle (5) which projects from the housing and by means of which the control element can be moved in the housing (2) and whose length can be adapted to the respective installation situation in the mounting wall;
c) a fastening part (18) which is arranged rotationally on the outer end region of the valve spindle (5);
d) a handle (25) which is fastened rotationally on the fastening part (18); wherein
e) the fastening part (18) has a receptacle (19) in which the valve spindle (5) can be received in an axially displaceable but rotational manner;
f) the fastening part (18) has a fastening element (22) by means of which the fastening part (18) can be fixed on the valve spindle (5) in any desired axial positions;
**characterized in that**
g) a support sleeve (11) is provided which bears an external thread (12) onto which a screw ring (13) is screwed in order to press a rose (14) belonging to the built-in fitting against the mounting wall, and **in that**
h) during fastening, the fastening part (18) bears on the screw ring (13) in such a way that an axial gap between an edge of the handle (25) that faces the mounting wall and the rose (14) which is adjacent in the axial direction is held to a defined gap size.

2. Sanitary built-in fitting according to Claim 1, **characterized in that** the fastening part (18) is a fastening ring and the receptacle (19) for the valve spindle (5) is formed by the central through-hole of the fastening ring (18).

3. Sanitary built-in fitting according to Claim 1 or 2, **characterized in that** the fastening element is a grub screw (22) which can be screwed through a threaded hole (21) of the fastening part (18) such that its inner end bears against the valve spindle (5) .

4. Sanitary built-in fitting according to one of the preceding claims, **characterized in that** the fastening part (18) has latching elements (23) by means of which it can be rotationally latched with complementary latching elements (26) of the handle (25) .

## Revendications

1. Robinetterie sanitaire encastrée, comprenant
a) un carter (2) pouvant être installé dans une paroi de montage, à distance de la face extérieure de cette dernière, et incluant au moins une admission d'eau (3) et au moins un élément de commande pilotant un écoulement d'eau ;
b) une broche de soupape (5) qui fait saillie au-delà du carter, permet audit élément de commande de se mouvoir dans ledit carter (2), et dont la longueur peut être adaptée à la situation considérée d'encastrement dans ladite paroi de montage ;
c) une pièce de fixation (18) implantée, avec blocage en rotation, sur la région extrême extérieure de ladite broche de soupape (5) ;
d) une poignée (25) fixée à ladite pièce de fixation (18), avec blocage en rotation ;
sachant que
e) la pièce de fixation (18) comporte un logement (19) dans lequel ladite broche de soupape (5) peut être mise en place avec faculté de coulissement axial, mais avec blocage en rotation ;
f) ladite pièce de fixation (18) est munie d'un élément de fixation (22) par lequel ladite pièce de fixation (18) peut être consignée à demeure sur ladite broche de soupape (5), en n'importe quels emplacements axiaux ;
**caractérisée**
g) **par** la présence d'une douille d'appui (11) comportant un filetage extérieur (12) sur lequel un anneau fileté (13) est vissé de manière à presser, contre la paroi de montage, une rosette (14) faisant partie de ladite robinetterie encastrée ; et
h) par le fait que la pièce de fixation (18) est en applique contre ledit anneau fileté (13) lors de la fixation, de telle sorte qu'un interstice axial, réservé entre un bord de la poignée (25) tourné vers ladite paroi de montage et ladite rosette (14) voisine dans le sens axial, soit maintenu à une cote bien définie.

2. Robinetterie sanitaire encastrée selon la revendication 1, **caractérisée par le fait que** la pièce de fixation (18) est une bague de fixation et le logement (19), dédié à la broche de soupape (5), est formé par le perçage central de passage de ladite bague de fixation (18).

3. Robinetterie sanitaire encastrée selon la revendication 1 ou 2, **caractérisée par le fait que** l'élément de fixation est une vis (22) sans tête, pouvant être vissée en traversant un trou taraudé (21) de la pièce de fixation (18), de façon telle que son extrémité intérieure soit en applique contre la broche de soupape (5).

4. Robinetterie sanitaire encastrée selon l'une des revendications précédentes, **caractérisée par le fait que** la pièce de fixation (18) est pourvue d'éléments encliquetables (23) par lesquels elle peut être crantée, avec blocage en rotation, sur des éléments encliquetables complémentaires (26) de la poignée (25).
